# FASCICULE DE BREVET EUROPEEN

(11) **EP 0 430 786 B1**
(45) Date de publication et mention de la délivrance du brevet: **01.03.1995**
(21) Numéro de dépôt: 90403335.4
(22) Date de dépôt: 26.11.1990
(51) Int. Cl.: C04B 14/48, C04B 20/00, E04C 5/01

(54) **Fibre discontinue en acier tréfilé et composite fibré contenant ladite fibre**
Stapelfaser aus gezogenem Stahl und diese Faser enthaltendes Faserverbundmaterial
Staple fibre made of drawn steel and fibrous composite containing said fibre

(30) Priorité: 30.11.1989 FR 8915839
(43) Date de publication de la demande: 05.06.1991
(73) Titulaire: ETAT FRANCAIS REPRESENTE PAR LE LABORATOIRE CENTRAL DES PONTS ET CHAUSSEES, 75732 Paris Cédex 15 (FR)
(72) Inventeur: Rossi, Pierre, F-75010 Paris (FR)
(74) Mandataire: Hasenrader, Hubert

(56) Documents cités:
- GB-A- 11 754
- US-A- 1 913 707
- US-A- 3 616 589
- CHEMICAL ABSTRACTS, vol. 107, no. 4, juillet 1987 Columbus, Ohio, USA page 265; ref. no. 27539X & JP-A-6287448 (Eito,Tatsumi) 21-04-1987

## Description

La présente invention concerne le domaine des composites fibrés.

Elle concerne plus particulièrement une nouvelle géométrie de fibre métallique discontinue destinée à être incorporée dans un composite fibré, notamment une matière cimenteuse.

Les bétons ou les mortiers ont un bon comportement à la compression et un mauvais comportement à la traction. Ce mauvais comportement peut entraîner des fissures dans le béton.

Le processus de fissuration d'un béton se fait en trois étapes et ces étapes sont toujours les mêmes quel que soit le chargement mécanique. On observe d'abord une microfissuration diffuse et répartie dans tout le volume du matériau. Ensuite on assiste à la coalescence d'un certain nombre de microfissures, pour former une ou plusieurs macrofissures. Enfin, durant la dernière phase, une ou plusieurs macrofissures créées dans l'étape précédente se propagent jusqu'à la rupture complète du matériau.

Afin d'améliorer le comportement de ces matériaux en traction, il a été proposé d'y introduire des fibres discontinues. A la différence des armatures classiques de béton armé, ces fibres discontinues sont réparties dans tout le volume du matériau.

Les fibres discontinues interviennent aux trois stades de la fissuration du béton. Durant la première étape de fissuration, les fibres agissent à la manière de coutures et retardent l'évolution des microfissures et, donc, la création de macrofissures. Ces dernières finissent malgré tout par se former à un moment donné, et les fibres agissent sur elles à la manière de pontages qui reprennent les efforts au travers des lèvres des macrofissures assurant ainsi la stabilité de la structure fissurée.

Pour que la fibre soit efficace à l'échelle de la microfissuration ou à l'échelle de la macrofissuration, il est nécessaire qu'elle soit bien ancrée dans la matrice cimenteuse.

Pour obtenir un bon ancrage de la fibre, il faut que celle-ci ait une bonne adhérence vis-à-vis de la matrice. L'adhérence est une propriété de la liaison fibre-matrice qui caractérise la résistance au glissement local de cette fibre. Cette bonne adhérence de la fibre dépend du matériau dont elle est faite, de sa surface spécifique plus ou moins importante, de son aspect de surface plus ou moins rugueux ou encore de la présence de crénelures, d'ondulations, etc... .

Lorsque l'adhérence entre la fibre et la matrice n'est pas très bonne, on peut malgré tout assurer un ancrage correct de cette fibre. En effet, dans ce cas, il suffit de choisir une longueur de fibre très importante par rapport aux ouvertures maximales de fissures que la fibre doit ponter ou on peut également ajouter aux extrémités de la fibre des têtes d'ancrage comme des crochets par exemple.

Il existe dans le commerce, de nombreux modèles de fibres métalliques discontinues destinées à améliorer les propriétés mécaniques d'une matrice cimenteuse, mais deux problèmes technologiques principaux peuvent généralement intervenir lorsque l'on introduit des fibres métalliques discontinues dans une matrice cimenteuse.

Le premier problème est que, plus on introduit une quantité importante de fibres dans du béton, plus la maniabilité de ce béton diminue, ce qui entraîne des problèmes de mise en place du béton de fibres dans les coffrages. Pour résoudre ce problème, la solution consiste à modifier le squelette granulaire du béton, c'est-à-dire le rapport sable/granulats. La maniabilité du composite fibré s'en trouve ainsi améliorée mais ceci au détriment des résistances mécaniques qui diminuent.

Le deuxième problème technologique est que pour la plupart des fibres d'acier tréfilé, dont la longueur est supérieure à celle des plus gros granulats de la matrice cimenteuse, il se produit un enchevêtrement des fibres dans la matrice, surtout lorsque le pourcentage de fibres incorporées devient important. Les fibres ont une certaine tendance à se grouper par paquets. Ce phénomène conduit à l'obtention d'un composite fibré dans lequel il y a des espaces sans fibres, et donc une hétérogénéité très importante du matériau. Cet aspect est très néfaste vis-à-vis des caractéristiques mécaniques du composite.

Les fibres d'acier tréfilé ont une grande ductilité en traction qui leur permet un allongement important tout en continuant à supporter l'effort qui leur est appliqué. Pour le béton, les fibres d'acier tréfilé doivent donc permettre de coudre les bords des macrofissures ayant une ouverture importante tout en assurant une certaine stabilité à la structure fissurée.

Les fibres droites discontinues qui sont connues, ont un mauvais ancrage dans la matrice et se mettent en paquets dans un béton courant lorsque leur longueur est supérieure ou égale à quinze millimètres et pour des pourcentages incorporés en volume supérieurs ou égaux à un pour cent.

Les fibres ondulées ou celles qui possèdent à leurs extrémités des têtes d'ancrage particulières, par exemple les fibres à têtes d'ancrage en forme d'os et celles en forme de têtes de clou, possèdent un bon ancrage mais elles ont également tendance à s'agglutiner lorsqu'on les introduit en pourcentage élevé dans la matrice. Seuls des procédés technologiques particuliers d'introduction de ces fibres dans la matrice, permettent de résoudre ce problème mais ces procédés accroissent de manière très sensible le prix de revient.

On connaît également des fibres, munies de crochets, qui se présentent sous forme de plaquettes de fibres accolées, ce qui facilite considérablement leur incorporation dans le béton et le malaxage de ce dernier. De plus, les crochets améliorent de façon importante l'ancrage de ces fibres. Les pointes de ces fibres sont divergentes pour éviter qu'elles s'accrochent entre elles et s'agglutinent ce qui donne au composite fibré un état de surface avec pointes apparentes.

On connaît également des fibres discontinues qui présentent la configuration d'une boucle convexe et fermée. Le brevet US 1 913 707 dévoile une fibre en forme de segment annulaire dont les deux extrémités sont en vis à vis. Avec cette fibre circulaire, l'augmentation de la dissipation par frottement que l'on obtiendrait en choisissant un faible rayon de courbure se ferait au détriment de la longueur d'ancrage. Enfin, lors du malaxage de la matrice cimenteuse, le segment peut s'ouvrir entrainant un agglutinement des fibres.

Le brevet U.S.A 3 616 589 dévoile une fibre ayant une forme convexe, mais fermée. La fermeture de l'anneau peut être obtenue en soudant les deux extrémités d'un segment annulaire. Cette structure évite l'agglutinement des fibres, mais elle ne permet pas d'obtenir à la fois une grande dissipation d'énergie par frottement (même problème qu'avec US 1 913 707) et par plastification, celle-ci se concentrant aux portions de segments voisines de la fissure.

Ce brevet US 3 616 589 constitue l'art antérieur le plus proche de la présente invention.

La présente invention concerne donc une fibre discontinue en acier tréfilé destinée à être incorporée dans un composite fibré, notamment une matière cimenteuse, réalisée à partir d'un tronçon de fil d'acier mis en forme pour que la fibre soit contenue dans un plan et présente, dans ce plan, la configuration d'une boucle convexe et fermée, caractérisée en ce qu'elle présente la configuration d'une boucle oblongue dont les extrémités sont délimitées par des portions de fil curvilignes, lesdites portions de fil curvilignes étant reliées entre elles par des portions de fil rectilignes et en ce que les deux parties d'extrémité dudit tronçon de fil sont disposées côte à côte et en sens opposés et s'étendent entre lesdites portions de fil curvilignes pour former l'une desdites portions de fil rectilignes.

Cette configuration de la fibre permet une dissipation d'énergie importante par frottement et par plastification. Les portions de fil curvilignes présentent en effet un faible rayon de courbure, ce qui permet de dissiper le maximum d'énergie par frottement. Les portions de fil rectilignes fournissent en outre une grande longueur d'ancrage de la fibre et par conséquent une grande dissipation d'énergie par plastification en cas de fissure transversale. De plus les deux parties d'extrémité (3, 4) de tronçon de fil étant disposées côte à côte et non soudées entre elles, améliorent encore la dissipation d'énergie par plastification tout en évitant aux fibres de s'accrocher l'une à l'autre lors du malaxage de la matrice cimenteuse.

Avantageusement, la longueur des portions de fil rectilignes est comprise entre dix et cinquante millimètres.

Avantageusement, les deux portions de fil sont écartées d'une distance supérieure aux deux cinquièmes de la longueur des portions de fil rectilignes et inférieure au double de cette longueur.

Avantageusement, le fil est cylindrique et son diamètre est compris entre 0,1 et 1 millimètre.

La géométrie de la fibre proposée s'apparente à celle d'une attache de bureau dite trombone, auquel manquerait la boucle permettant d'assurer le pincement.

La structure fermée de la fibre discontinue proposée permet un confinement local de la matrice cimenteuse qui conduit à un meilleur contrôle de la microfissuration pouvant apparaître dans cette matrice.

La forme de la fibre proposée peut se voir comme une fibre munie de très grands crochets dont les parties voisines des pointes se recouvrent sur une grande distance, ce qui permet un excellent ancrage de la fibre dans la matrice.

La mise en oeuvre de ces fibres est aisée et ne nécessite aucune technologie supplémentaire particulière pour éviter la mise en paquets des fibres lors de la fabrication du composite fibré. Ceci s'explique par le fait que les plus gros granulats du béton, ayant une forme et des dimensions similaires à celles de la fibre proposée, permettent, par effet de paroi, d'individualiser chaque fibre au sein de la matrice lors du malaxage. De plus, on ne risque plus d'être blessé par les pointes des fibres lors de leur manipulation.

La présente invention concerne également un composite fibré contenant une fibre conforme à la fibre décrite ci-dessus.

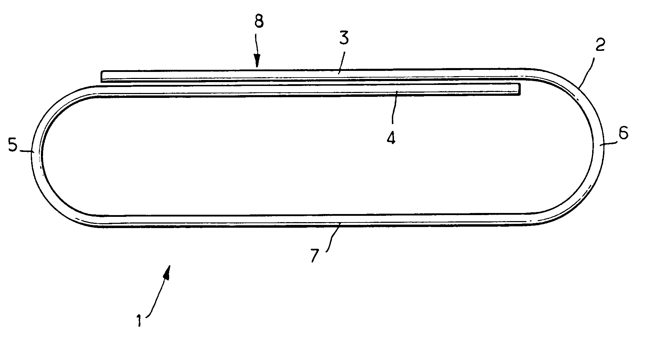

Un exemple de réalisation de l'invention est ci-après décrit en référence au dessin unique annexé qui représente une fibre discontinue en acier tréfilé conforme à l'invention.

La fibre discontinue 1 en acier tréfilé, comme on le voit clairement sur le dessin, est réalisée à partir d'un tronçon 2 de fil d'acier cylindrique mis en forme pour que la fibre 1 soit contenue dans un plan et présente dans ce plan la configuration d'une boucle convexe et fermée, les deux parties d'extrémité 3 et 4 du tronçon 2 de fil d'acier étant disposées côte à côte et en sens opposés. De préférence la fibre a la forme d'une boucle oblongue et comporte deux portions de fil curvilignes 5 et 6 en demi-cercle reliées entre elles par des portions de fil rectilignes 7 et 8. Les deux parties d'extrémité 3 et 4 du tronçon de fil 2 forment la portion rectiligne 8 et s'étendent entre les portions curvilignes 5 et 6.

La longueur des portions rectilignes 7 et 8 est comprise entre dix et cinquante millimètres, et ces portions rectilignes qui sont sensiblement parallèles sont écartées d'une distance comprise entre les deux cinquièmes de leur longueur et le double de cette longueur. Le tronçon de fil 2 est, de préférence, cylindrique et son diamètre est compris entre un dixième de millimètre et un millimètre.

Le dimensionnement de la fibre 1 utilisé dans un composite fibré, notamment une matrice cimenteuse, est fonction de la taille des granulats incorporés dans la matrice cimenteuse. Le pourcentage en volume de fibres dans la matrice cimenteuse est voisin de un pour cent.

La forme fermée des fibres 1 empêche celles-ci de s'accrocher entre elles, et les parois des granulats entraînent les fibres lors du malaxage de la matrice cimenteuse, permettant ainsi d'obtenir un composite fibré homogène dans lequel les fibres sont individualisées. Cette forme fermée permet également un parfait ancrage des fibres et donne au composite un état de surface exempt de pointes.

## Revendications

1. Fibre discontinue en acier tréfilé destinée à être incorporée dans un composite fibré, notamment une matière cimenteuse, réalisée à partir d'un tronçon de fil d'acier (2) mis en forme pour que la fibre soit contenue dans un plan et présente, dans ce plan, la configuration d'une boucle convexe et fermée, caractérisée en ce qu'elle présente la configuration d'une boucle oblongue dont les extrémités sont délimitées par des portions de fil curvilignes (5, 6), lesdites portions de fil curvilignes (5, 6) étant reliées entre elles par des portions de fil rectilignes (7, 8) et en ce que les deux parties d'extrémité (3, 4) dudit tronçon de fil (2) sont disposées côte à côte et en sens opposés et s'étendent entre lesdites portions de fil curvilignes (5, 6) pour former l'une desdites portions de fil rectilignes (8).

2. Fibre selon la revendication 1, caractérisée en ce que la longueur des portions de fil rectilignes (7, 8) est comprise entre dix millimètres et cinquante millimètres.

3. Fibre selon la revendication 1, caractérisée en ce que les deux portions de fil rectilignes (7, 8) sont écartées d'une distance supérieure aux deux cinquièmes de la longueur des portions de fil rectilignes (7, 8) et inférieure au double de cette longueur.

4. Fibre selon la revendication 1, caractérisée en ce que le fil est cylindrique et en ce que son diamètre est compris entre 0,1 millimètre et 1 millimètre.

5. Composite fibré, notamment une matrice cimenteuse, comportant une fibre discontinue en acier tréfilé noyée dans une masse cimenteuse, caractérisé en ce qu'il comporte une fibre (1) conforme à l'une des revendications 1 à 4.

6. Composite fibré selon la revendication 5 caractérisé en ce que le pourcentage en volume de fibres est voisin de un pour cent.

## Claims

1. Staple fibre made of drawn steel adapted to be incorporated into a fibrous composite, especially a cement material, made from a length of steel wire (2) shaped so that the fibre is contained in a plane and, in this plane, is in the shape of a closed convex loop, characterised in that it has the shape of an oblong loop the ends of which are delimited by curvilinear wire portions (5, 6), the said curvilinear wire portions (5, 6) being connected together by rectilinear wire portions (7, 8) and in that the two end parts (3, 4) of the said wire portion (2) are disposed side by side and in opposite directions and extend between the said curvilinear wire portions (5, 6) in order to form one of the said rectilinear wire portions (8).

2. Fibre according to claim 1, characterised in that the length of the rectilinear wire portions (7,8) is between ten millimetres and fifty millimetres.

3. Fibre according to claim 1, characterised in that the two rectilinear wire portions (7, 8) are spaced apart by a distance greater than two-fifths of the length of the rectilinear wire portions (7, 8) and less than twice this length.

4. Fibre according to claim 1, characterised in that the wire is cylindrical and in that its diameter is between 0.1 millimetre and 1 millimetre.

5. Fibrous composite, especially a cement matrix, comprising a staple fibre made of drawn steel embedded in a cement mass, characterised in that it comprises a fibre (1) according to one of claims 1 to 4.

6. Fibrous composite according to claim 5, characterised in that the percentage by volume of fibres is close to one per cent.

## Patentansprüche

1. Stapelfaser aus gezogenem Stahldraht, die dazu bestimmt ist, in einen Faser-Verbundstoff, insbesondere in ein Zementmaterial, eingearbeitet zu werden, hergestellt aus einem Stahldrahtstück (2), das so geformt ist, daß die Faser in einer Ebene enthalten ist und in dieser Ebene die Gestalt einer konvexen und geschlossenen Schleife aufweist, dadurch gekennzeichnet, daß sie die Gestalt einer länglichen Schleife aufweist, deren Enden von gebogenen Drahtabschnitten (5, 6) begrenzt werden, wobei diese gebogenen Drahtabschnitte (5, 6) untereinander durch gerade Drahtabschnitte (7, 8) verbunden sind, und daß die zwei Endteile (3, 4) des Drahtstücks (2) nebeneinander und in entgegengesetzter Richtung angeordnet sind und sich zwischen den gebogenen Drahtabschnitten (5, 6) erstrecken, um einen der geraden Drahtabschnitte (8) zu bilden.

2. Faser nach Anspruch 1, dadurch gekennzeichnet, daß die Länge der geraden Drahtabschnitte (7, 8) zwischen zehn Millimeter und fünfzig Millimeter beträgt.

3. Faser nach Anspruch 1, dadurch gekennzeichnet, daß die zwei geraden Drahtabschnitte (7, 8) in einem Abstand voneinander angeordnet sind, der größer als zwei Fünftel der Länge der geraden Drahtabschnitte (7, 8) und kleiner als das Doppelte dieser Länge ist.

4. Faser nach Anspruch 1, dadurch gekennzeichnet, daß der Draht zylindrisch ist und daß sein Durchmesser zwischen 0,1 Millimeter und 1 Millimeter beträgt.

5. Faser-Verbundstoff, insbesondere eine Zementmatrix, umfassend eine Stapelfaser aus gezogenem Stahldraht, welche in eine Zementmasse eingebettet ist, dadurch gekennzeichnet, daß er eine Faser (1) nach einem der Ansprüche 1 bis 4 enthält.

6. Faser-Verbundstoff nach Anspruch 5, dadurch gekennzeichnet, daß der prozentuale Volumenanteil der Fasern ungefähr ein Prozent ist.
